# EUROPÄISCHE PATENTSCHRIFT

(11) **EP 2 861 496 B1**
(45) Veröffentlichungstag und Bekanntmachung des Hinweises auf die Patenterteilung: **27.09.2017**
(21) Anmeldenummer: 13724186.5
(22) Anmeldetag: 03.05.2013
(51) Int. Cl.: B65B 35/30, B65B 35/44, B65B 63/02, B65G 19/02, B65G 47/08, B65G 47/28, B65G 54/02, B65B 35/24, B65B 35/50, B65B 57/16, B65G 47/30, B65B 9/06

(54) **ZUFÜHRVORRICHTUNG FÜR VERPACKUNGSMASCHINE**
FEEDING DEVICE FOR PACKAGING MACHINE
DISPOSITIF D'AMENAGE POUR MACHINE D'EMBALLAGE

(30) Priorität: 19.06.2012 DE 102012210329
(43) Veröffentlichungstag der Anmeldung: 22.04.2015
(73) Patentinhaber: Robert Bosch GmbH, 70442 Stuttgart (DE)
(72) Erfinder: LANDHOLT, Markus, CH-8215 Hallau (CH); KATHAN, Philipp, CH-8246 Langwiesen (CH); WANNER, Hansruedi, CH-8214 Gächlingen (CH); HURNI, Marc, CH-8200 Schaffhausen (CH); WIPF, Alfred, 79798 Jestetten (DE)
(86) Internationale Anmeldenummer: PCT/EP2013/059225
(87) Internationale Veröffentlichungsnummer: WO 2013/189656

(56) Entgegenhaltungen:
- EP-A1- 2 045 187
- EP-A1- 2 364 916
- WO-A1-2006/024460
- WO-A2-03/047977
- DE-A1- 10 258 447
- DE-A1- 10 341 992
- DE-A1-102008 040 204
- DE-A1-102009 029 314
- US-B1- 6 191 507
- US-B2- 7 475 768
- Beckhoff Automation: "EN | XTS. The Linear Transport System from Beckhoff.", , 6 June 2012 (2012-06-06), XP054976305, Retrieved from the Internet: URL:https://www.youtube.com/watch?v=GQsnjF TG26U [retrieved on 2016-01-15]

## Beschreibung

### Stand der Technik

Es sind aus der WO 03/105324 bereits Zufuhrvorrichtungen zum Zuführen von Produkten und/oder Produktstapeln zu einem Verpackungsprozess einer Verpackungsmaschine, insbesondere einer horizontalen Schlauchpackmaschine, mit zumindest einer als geschlossene Schleife ausgebildeten Führungseinheit, auf welcher eine Vielzahl angeordneter Förderelemente zumindest entlang zumindest eines Arbeitsabschnitts der Führungseinheit voneinander unabhängig geschwindigkeits- und/oder positionsgeregelt antreibbar angeordnet sind, bekannt. Die Förderelemente fördern jeweils ein Produkt und/oder einen Produktstapel. Produkte werden beim Fördern einseitig abgestützt. Eine beidseitige Abstützung verlangt nach auf eine Produktlänge angepassten Formatteilen, die bei einer Änderung der Produktlänge ausgetauscht und/oder umgestellt werden müssen.

Des Weiteren sind aus DE 10 2008 040 204 A1 und EP 2 045 187 A1 sowie WO 03/047977 A1 ebenfalls bereits Zufuhrvorrichtungen zum Zuführen von Produkten und/oder Produktstapeln zu einem Verpackungsprozess einer Verpackungsmaschine bekannt, die zumindest eine als geschlossene Schleife ausgebildete Führungseinheit umfasst, auf welcher eine Vielzahl angeordneter Förderelemente zumindest entlang zumindest eines Arbeitsabschnitts der Führungseinheit voneinander unabhängig geschwindigkeits- und/oder positionsgeregelt antreibbar angeordnet sind.

Ein als Schleife ausgebildeter Linearmotor ist Gegenstand des Dokuments XP054976305 (veröffentlicht am 06.06.2012 auf YouTube unter der Bezeichnung "EN | XTS. The Linear Transport System from Beckhoff"). Der Linearmotor umfasst einen als Schleife ausgebildeten magnetischen Direktantrieb, auf dem Mover individuell ansteuerbar vorgesehen sind. Es wird gezeigt, dass Gegenstände, die auf einem Förderband herantransportiert werden, zwischen zwei Movern eingeklemmt und so vom Linearmotor weiter transportiert werden.

### Offenbarung der Erfindung

Die Erfindung geht aus von einer Zufuhrvorrichtung zum Zuführen von Produkten und/oder Produktstapeln zu einem Verpackungsprozess einer Verpackungsmaschine, insbesondere einer horizontalen Schlauchpackmaschine, mit zumindest einer als geschlossene Schleife ausgebildeten Führungseinheit, auf welcher eine Vielzahl angeordneter Förderelemente zumindest entlang zumindest eines Arbeitsabschnitts der Führungseinheit voneinander unabhängig geschwindigkeits- und/oder positionsgeregelt antreibbar angeordnet sind, wobei zumindest ein Förderelement einen Halter und zumindest ein entgegen einer Förderrichtung folgendes Förderelement einen Gegenhalter aufweist.

Es wird vorgeschlagen, dass die Zufuhrvorrichtung zumindest ein Stützelement aufweist, das auf der Führungseinheit zwischen zwei Förderelementen angeordnet ist, wobei das Stützelement als Sekundärteil eines Linearmotorsystems ausgebildet ist und durch eine Steuereinheit positions- und geschwindigkeitsgeregelt antreibbar ist. Alternativ wird vorgeschlagen, dass die Zufuhrvorrichtung zumindest ein Stützelement aufweist, das auf der Führungseinheit zwischen zwei Förderelementen angeordnet ist, wobei das Stützelement passiv auf der Führungseinheit angeordnet ist und durch die Förderelemente ziehbar und/oder stoßbar ist, wobei aufeinander zugewandte Abschlusskanten von Stützflächen von Halter, Gegenhalter und Stützelement als ineinandergreifende Kämme ausgebildet sind, so dass der Produktstapel zwischen Halter und Gegenhalter durchgehend gestützt wird. Unter einem "Stützelement" soll insbesondere ein Element verstanden werden, das dazu vorgesehen ist, ein Produkt oder einen Produktstapel insbesondere gegen die Gewichtskraft zu unterstützen. Das Stützelement kann bevorzugt von der Führungseinheit in Förderrichtung beweglich gelagert werden. Das Stützelement kann entlang der Förderrichtung passiv bewegt werden, insbesondere durch angrenzende Förderelemente. Die Förderelemente können Mittel enthalten, um das Stützelement zu ziehen und/oder zu stoßen. Bevorzugt ist das Stützelement geschwindigkeits- und/oder positionsgeregelt antreibbar. Bevorzugt ist zwischen jedem einen Halter tragenden Förderelement und dem in Förderrichtung nachfolgenden, einen Gegenhalter tragenden Förderelement zumindest ein Stützelement angeordnet, besonders bevorzugt ein einzelnes Stützelement. Bevorzugt kann das Stützelement und/oder können die Förderelemente Stützflächen mit einer kammartigen Abschlusskante aufweisen. Die kammartigen Abschlusskanten von benachbarten Förderelementen und/oder Stützelementen können sich bevorzugt während dem Fördern von Produkten oder Produktstapeln überlappen. Ein Gegenhalter kann an einem einen Halter aufweisenden

Förderelement in Förderrichtung folgenden Förderelement angeordnet sein, bevorzugt am nächsten in Förderrichtung folgenden Förderelement. Unter einer "Förderrichtung" soll in diesem Zusammenhang insbesondere diejenige Richtung entlang der Führungseinheit verstanden werden, in der sich die Förderelemente beim Zuführen von Produkten im Umlauf befinden. Die Zufuhrvorrichtung kann insbesondere dazu vorgesehen sein, Produkte und/oder Produktstapel in einem vordefinierten Abstand und mit einer an den Verpackungsprozess angepassten Geschwindigkeit synchronisiert in den Verpackungsprozess einzubringen. Unter einem "Produkt" soll in diesem Zusammenhang ein zu verpackender Gegenstand oder eine Packung, die zumindest einen Gegenstand enthält, verstanden werden. Eine Packung kann in diesem Zusammenhang insbesondere eine Folienverpackung, wie ein Schlauchbeutel, oder ein Tray sein. Ein Gegenstand kann insbesondere ein stückiges Nahrungsmittel, bevorzugt ein Biskuit, insbesondere scheibenförmiges Biskuit, sein. Die Zufuhrvorrichtung kann bevorzugt dazu vorgesehen sein, Gegenstände und/oder Trays und/oder Folienpackungen, die Gegenstände enthalten, und/oder Stapel von Gegenständen und/oder Trays und/oder Folienpackungen in den Verpackungsprozess einzubringen. Unter einem "Produktstapel" soll in diesem Zusammenhang insbesondere ein vertikaler oder bevorzugt horizontaler Stapel, der von mehreren Produkten, wie Gegenständen und/oder Packungen, gebildet wird, verstanden werden. Es ist weiter möglich, dass ein Produktstapel mehrere Stapel von Produkten enthält, insbesondere kann ein horizontaler Produktstapel von mehreren vertikalen Stapeln von Produkten gebildet sein. Unter einer "horizontalen Schlauchbeutelmaschine" soll in diesem Zusammenhang insbesondere eine, dem Fachmann als HFFS "Horizontal Form Fill Seal"-Verpackungsmaschine bekannte Verpackungsmaschine verstanden werden, die dazu vorgesehen ist, aus einer Materialbahn zumindest einen Folienschlauch um einen oder mehrere zu verpackende Produkte zu einem Schlauchbeutel zu formen und diesen an beiden Enden zu verschließen. Bevorzugt kann die horizontale Schlauchbeutelmaschine dazu vorgesehen sein, zumindest 100 Schlauchbeutel/Minute zu erstellen, besonders bevorzugt mehr als 250 Schlauchbeutel/Minute. Bevorzugt kann die Schlauchbeutelmaschine dazu vorgesehen sein, bis zu 1000, besonders bevorzugt bis zu 1500 Schlauchbeutel/Minute zu erstellen. Zu verpackende Produkte und der um die Produkte geformte Folienschlauch werden während des Formens des Schlauchs, dem Einbringen der zu verpackenden Produkte in den Folienschlauch und dem Verschließen des Schlauchs bevorzugt zumindest im Wesentlichen in einer horizontalen Verpackungsrichtung bewegt. Unter "zumindest im Wesentlichen horizontal" soll in diesem Zusammenhang insbesondere eine Richtung verstanden werden, die weniger als 60°, bevorzugt weniger als 45°, besonders bevorzugt um weniger als 20° von einer senkrecht zu einer Gewichtskraft angeordneten Horizontalen abweicht. Unter einem "Förderelement" soll in diesem Zusammenhang insbesondere ein von Lagermitteln der Führungseinheit beweglich gelagertes Element verstanden werden, das dazu vorgesehen ist, in zumindest einem Betriebszustand ein durch die Zufuhrvorrichtung zugeführtes Produkt und/oder einen Produktstapel in zumindest einer Richtung abzustützen, insbesondere durch einen Halter und/oder Gegenhalter. Unter einer "geschlossenen Schleife" soll in diesem Zusammenhang insbesondere eine Bahn verstanden werden, in der sich die Förderelemente in einem Umlauf befinden. Die Bahn kann eine beliebige Form aufweisen. Bevorzugt ist die Bahn zumindest im Bereich einer Zufuhrstrecke und/oder einer Rückfuhrstrecke zumindest im Wesentlichen als Gerade ausgebildet. Unter "zumindest im Wesentlichen" soll in diesem Zusammenhang eine seitliche Bahnabweichung von weniger als 5%, besonders bevorzugt weniger als 1% bezogen auf eine Bahnlänge in Bahnrichtung verstanden werden. Bevorzugt weist die Bahn zwischen Zufuhrstrecke und Rückfuhrstrecke bevorzugt kreisförmige Umlenkbereiche auf. Die Führungseinheit kann besonders kompakt und kostengünstig sein. Insbesondere kann die Zufuhrstrecke zumindest im Wesentlichen parallel zur Verpackungsrichtung des Verpackungsprozesses der Verpackungsmaschine angeordnet sein. Die Führungseinheit kann besonders gut geeignet sein, der Verpackungsmaschine Produkte in Verpackungsrichtung zuzuführen. In einer weiteren Ausbildung kann die Zufuhrstrecke in einem rechten Winkel zur Verpackungsrichtung angeordnet sein. Produkte und/oder Produktstapel können quer besonders platzsparend in den Verpackungsprozess eingebracht werden. Der Fachmann wird weitere, sinnvolle Anordnungen der Zufuhrstrecke festlegen. Die Bahn kann Mittel enthalten, um weitere Förderelemente in den Umlauf zu bringen oder diese aus dem Umlauf zu entfernen, wie insbesondere Weichen. Eine Gesamtzahl von Förderelementen kann vorteilhaft angepasst werden.

Bevorzugt kann die Zufuhrvorrichtung an der Verpackungsmaschine höhenverstellbar angeordnet sein. Unterschiedliche Produkthöhen können ausgeglichen werden. Unter einer "Höhe" soll in diesem Zusammenhang insbesondere eine Richtung zumindest im Wesentlichen parallel zur Gewichtskraft verstanden werden. Unter einer "Zufuhrstrecke" soll in diesem Zusammenhang insbesondere der Teil der Führungseinheit verstanden werden, der sich von einem Produktübernahmebereich bis zu einem Produktabgabebereich erstreckt. Unter einem "Produktübernahmebereich" soll in diesem Zusammenhang insbesondere ein Bereich der Führungseinheit verstanden werden, in dem die Zufuhrvorrichtung mit Produkten und/oder Produktstapeln beladen wird. Unter einem Produktabgabebereich soll in diesem Zusammenhang insbesondere ein Bereich der Führungseinheit verstanden werden, in dem die Zufuhrvorrichtung die Produkte an den Verpackungsprozess abgibt. Unter einem "Arbeitsabschnitt" soll in diesem Zusammenhang insbesondere ein Abschnitt der Zufuhrstrecke verstanden werden, in dem die Förderelemente unabhängig geschwindigkeits- und/oder positionsgeregelt antreibbar sind. Unter "unabhängig" antreibbar soll in diesem Zusammenhang insbesondere verstanden werden, dass Geschwindigkeits- und/oder Positionssollwerte der Förderelemente innerhalb von Grenzen unabhängig eingestellt werden können, in denen die Förderelemente kollisionsfrei sind. Insbesondere kann der Produktübernahmebereich und/oder der Produktabgabereich ein Arbeitsabschnitt oder Teil eines Arbeitsabschnitts sein. Förderelemente können außerhalb der Arbeitsabschnitte bevorzugt passiv oder geschwindigkeits- und/oder positionsgesteuert antreibbar sein. Unter einem "Halter" soll in diesem Zusammenhang insbesondere ein Element verstanden werden, das dazu vorgesehen ist, in zumindest einem Betriebszustand ein Produkt oder einen Produktstapel in der Förderrichtung abzustützen. Unter einem "Gegenhalter" soll in diesem Zusammenhang insbesondere ein Element verstanden werden, das dazu vorgesehen ist, in zumindest einem Betriebszustand ein Produkt oder einen Produktstapel entgegen der Förderrichtung abzustützen. Der Gegenhalter kann insbesondere dazu vorgesehen sein, zu verhindern, dass die Produkte und/oder die Produktstapel in Förderrichtung kippen. Die Förderelemente können zusätzlich Produktauflagen aufweisen, um Produkte oder Produktstapel gegen die Gewichtskraft abzustützen. Bevorzugt kann die Zufuhrvorrichtung eine Auflagefläche aufweisen, die die Produkte abstützt. Die Führungseinheit und die Förderelemente sind bevorzugt auf einer produktabgewandten Seite der Auflagefläche angeordnet. Die Auflagefläche weist bevorzugt zumindest eine sich in Förderrichtung erstreckende Ausnehmung auf, durch die die Halter und Gegenhalter auf die produktzugewandte Seite der Auflagefläche ragen. Halter und Gegenhalter eines Produkts oder einer Produktgruppe können in und entgegen der Förderrichtung unabhängig bewegt werden. Bei einer Produktübernahme kann der Halter und Gegenhalter angepasst an einen Produktübernahmeprozess bewegt werden. Insbesondere kann bei einer Übernahme mehrerer Produkte ein Abstand zwischen Halter und Gegenhalter an eine wachsende Produktzahl angepasst vergrößert werden. Abstand von Halter und Gegenhalter kann einer Produkt- oder Produktstapellänge angepasst werden. Produkte oder Produktstapel können in den Produktübernahmebereichen und/oder den Produktabgabebereichen unabhängig synchronisiert übernommen und/oder abgegeben werden. Eine Geschwindigkeit bei der Produktüberahme und/oder Produktabgabe kann besonders hoch sein. Die Geschwindigkeit kann besonders gut auf den vorhergehenden oder den nachfolgenden Prozess abgestimmt sein, insbesondere auf die Verpackungsgeschwindigkeit und/oder eine Foliengeschwindigkeit der Verpackungsmaschine. Unter "Teilung" soll ein Abstand zwischen aufeinanderfolgenden Haltern verstanden werden. Die Teilung aufeinander folgender Halter kann unabhängig eingestellt werden. Eine Vorlaufstrecke, in der Packungsabstände zwischen Produkten oder Produktstapeln vor der Produktübernahme eingestellt werden, kann entfallen. Die Zufuhrvorrichtung kann Produkte mit unterschiedlichen Produktlängen und/oder Produktstapellängen und/oder Packungsabständen formatwechselfrei zuführen. Unter einem "Formatwechsel" soll in diesem Zusammenhang insbesondere eine Umstellung verstanden werden, bei der Teile ausgetauscht und/oder durch einen insbesondere manuellen Eingriff angepasst werden, wie insbesondere eingestellt und/oder justiert. Die Zufuhrvorrichtung kann besonders effizient und flexibel sein. Eine Baulänge der Zufuhrvorrichtung kann besonders kurz sein. Eine Leistungsfähigkeit der Zufuhrvorrichtung kann besonders hoch sein.

Weiter wird vorgeschlagen, dass zumindest ein Förderelement zumindest einen Halter und zumindest einen Gegenhalter aufweist. Ein Förderelement kann gleichzeitig einen Halter für ein Produkt oder einen Produktstapel und einen Gegenhalter für ein entgegen der Förderrichtung folgendes Produkt oder einen Produktstapel tragen. Bevorzugt können Halter und Gegenhalter einstückig ausgebildet sein. Es können Förderelemente eingespart werden. Die Zufuhrvorrichtung kann besonders kostengünstig sein. Zwischen zwei aufeinander folgenden Produkten oder Produktstapeln kann nur ein Förderelement angeordnet sein. Es können besonders geringe Produktabstände möglich sein. Es kann vorteilhaft erreicht werden, dass Produkte oder Produktstapel zwischen Halter und Gegenhalter unterbrechungsfrei gestützt werden. Die Zufuhrvorrichtung kann Produkte oder Produktstapel besonders schonend transportieren. Insbesondere kann vermieden werden, dass Produkte oder Produktstapel über eine Auflagefläche geschoben werden. Reibung und/oder Beschädigungen und/oder Abrieb von Produkten oder Produktstapeln kann vermieden werden. Insbesondere können klebrige und/oder weiche Produkte oder Produktstapel zugeführt werden, die nicht über eine stehende Fläche geschoben werden können. Ein Gleiten von Produkten und/oder Produktstapeln über die unbewegte Auflagefläche und/oder ein Produktabrieb kann vermieden werden. Eine Verschmutzung der Zufuhrvorrichtung durch Produktabrieb kann reduziert werden. Reinigungs- und/oder Stillstandzeiten können reduziert werden.

Weiter wird eine Steuereinheit vorgeschlagen, die dazu vorgesehen ist, eine Produkt- oder Produktstapellänge und/oder die Teilung zwischen in Förderrichtung aufeinander folgenden Produkten oder Produktstapeln zu steuern und/oder zu regeln. Unter einer "Steuereinheit" soll in diesem Zusammenhang insbesondere eine elektrische und/oder elektronische Vorrichtung der Zufuhrvorrichtung verstanden werden, die zu einer Steuerung und/oder Regelung von Antrieben der Zufuhrvorrichtung vorgesehen ist. Die Steuereinheit der Zufuhrvorrichtung kann bevorzugt Teil einer Steuereinheit der Verpackungsmaschine sein, zu der die Zufuhrvorrichtung Produkte oder Produktstapel zuführt. Insbesondere kann die Steuereinheit zu einer Geschwindigkeits- und Positionsregelung der Förderelemente vorgesehen sein. Produkt- oder Produktstapellänge und Teilung kann vorteilhaft durch die Steuereinheit eingestellt werden. Formatwechsel können vermieden werden. Die Zufuhrvorrichtung kann besonders flexibel sein.

Weiter wird vorgeschlagen, dass die Steuereinheit dazu vorgesehen ist, Produkt- oder Produktstapellängen und/oder die Teilung von in Förderrichtung aufeinander folgenden Produkten oder Produktstapeln variabel einzustellen. Unter "variabel" soll in diesem Zusammenhang insbesondere verstanden werden, dass Teilung und/oder Produkt- oder Produktstapellängen aufeinanderfolgender Produkte unterschiedlich sein können. Es können aufeinanderfolgend unterschiedlich lange Produkte verpackt werden. Es können aufeinander folgende unterschiedlich lange Produktstapel einer abweichenden Produktzahl verpackt werden. Insbesondere können fehlende Produkte und/oder Produktstapel kompensiert werden.

Weiter wird vorgeschlagen, dass die Steuereinheit dazu vorgesehen ist, Produkt- oder Produktstapellängen zu ermitteln. Die Steuereinheit kann die Produkt- oder Produktstapellängen insbesondere ermitteln, indem sie einen Abstand zwischen Halter und Gegenhalter verringert, bis die Produktlänge des zwischen Halter und Gegenhalter befindlichen Produkts oder Produktstapels erreicht ist. Ein Widerstand des Produkts oder Produktstapels bei einem Kontakt mit dem Halter und Gegenhalter kann eine Andruckkraft zwischen Halter und Gegenhalter übertragen. Die Steuereinheit kann dazu vorgesehen sein, die Andruckkraft zu ermitteln und/oder zu bewerten. Die Steuereinheit kann die Kraft mit Hilfe von Regelgrößen, insbesondere Antriebsströmen der Förderelemente, ermitteln. Die Förderelemente und/oder Halter und/oder Gegenhalter können über Kraftmesseinrichtungen verfügen. Es können weitere Vorrichtungen vorhanden sein, um einen Kontakt eines Produkts und/oder Produktstapels mit dem Halter und dem Gegenhalter zu ermitteln, insbesondere Lichtschranken und/oder Näherungssensoren. Die Steuereinheit kann die Zufuhrvorrichtung selbstständig auf Produktlängen oder Produktstapellängen zugeführter Produkte einstellen. Eine Formatumstellung kann entfallen. Produktlängen oder Produktstapellängen können variabel sein. Eine Einstellung der Zufuhrvorrichtung und/oder eine Übermittlung der Produktlängen oder Produktstapellängen an die Zufuhrvorrichtung vor der Produktübernahme kann entfallen.

Weiter wird vorgeschlagen, dass die Steuereinheit dazu vorgesehen ist, in zumindest einem Betriebszustand zumindest ein Förderelement entgegen der Förderrichtung zu bewegen. Insbesondere kann die Steuereinheit dazu vorgesehen sein, dass bei der Abgabe des Produkts oder des Produktstapels an den Verpackungsprozess im Produktabgabebereich der Stapel durch kurzzeitiges Zurückfahren des Halters entgegen der Förderrichtung frei gegeben wird. Ein Abtauchen des Halters kann entfallen. Unter einem "Abtauchen" des Halters soll in diesem Zusammenhang insbesondere verstanden werden, dass der Halter auf die den Produkten abgewandte Seite der Auflagefläche zurückgezogen wird, um das Produkt oder den Produktstapel freizugeben. Die Zufuhrvorrichtung kann besonders einfach aufgebaut sein. Eine Einrichtung, die ein Abtauchen der Halter bewirkt, kann entfallen. Weiter kann ein Förderelement entgegen der Förderrichtung bewegt werden, um im Bereich der Produktübernahme die Förderelemente mit durch eine Vor- und Rückbewegung einer Produktübergabevorrichtung zu synchronisieren. Ein Abstand zwischen Halter und Gegenhalter kann während der Produktübernahme vergrößert werden. Die Produktübernahme kann besonders zuverlässig sein. Bevorzugt kann ein Förderelement unter einer Produktübergabevorrichtung, insbesondere einem Schacht, mehrfach Vor- und Zurückbewegt werden, um von der Produktübergabevorrichtung nacheinander mehrere Produkte zu übernehmen. Insbesondere kann durch mehrfaches vor- und zurückbewegen unter einer Produktübergabevorrichtung ein Produktstapel gebildet werden. Produkte können besonders flexibel übergeben werden. Unterschiedliche Produktkonfigurationen können ohne Umstellungen der Produktübergabevorrichtung gebildet werden.

Weiter wird vorgeschlagen, dass zumindest ein Abschnitt der Führungseinheit als Pufferabschnitt ausgebildet ist. Unter einem "Pufferabschnitt" soll in diesem Zusammenhang insbesondere ein Bereich der Zufuhrstrecke zwischen Produktübernahmebereich und Produktabgabebereich verstanden werden, der dazu vorgesehen ist, eine Anzahl Produkte und/oder Produktstapel zwischenzuspeichern. Insbesondere können Produkte und/oder Produktstapel im Pufferabschnitt gegenüber einer Geschwindigkeit des Verpackungsprozesses und/oder Zufuhrprozesses beschleunigt oder abgebremst werden, um die Anzahl Produkte und/oder Produktstapel im Puffer zu variieren. Schwankungen zwischen Produktzufuhr und Produktabgabe können vorteilhaft ausgeglichen werden. Zusätzlich kann zumindest ein Bereich einer Rückfuhrstrecke der Förderelemente als Pufferabschnitt ausgebildet sein. Unter einer "Rückfuhrstrecke" der Förderelemente soll in diesem Zusammenhang insbesondere der Teil der Führungseinheit zwischen Produktabgabebereich und Produktübernahmebereich verstanden werden, der dazu dient, die Förderelemente vom Produktabgabebereich wieder zum Produktübernahmebereich zu transportieren. Es kann sichergestellt werden, dass vor dem Produktübernahmebereich eine ausreichende Zahl Förderelemente zur Verfügung stehen.

Weiter wird vorgeschlagen, dass die Führungseinheit zumindest einen Primärteil und die Förderelemente jeweils zumindest einen Sekundärteil eines Linearmotorsystems enthalten. Unter einem "Primärteil" eines Linearmotorsystems soll in diesem Zusammenhang insbesondere ein fest stehender, Elektromagnete aufweisender Stator eines Linearmotors verstanden werden. Unter einem "Sekundärteil" eines Linearmotorsystems soll in diesem Zusammenhang insbesondere ein bevorzugt durch Permanentmagnete gebildeter, einem Rotor eines rotierenden Motors entsprechender, beweglicher Teil eines Linearmotors verstanden werden. Unter einem "Linearmotorsystem" soll in diesem Zusammenhang insbesondere ein System verstanden werden, welches aus zumindest einem Primärteil und einer Vielzahl von zumindest einem Primärteil bewegbaren Sekundärteilen besteht. Das Linearmotorsystem verfügt bevorzugt über Wegmess- und Positionsmesseinrichtungen, um den Ort und/oder die Geschwindigkeit der Sekundärteile zu ermitteln. Solche Linearmotorsysteme sind dem Fachmann bekannt. Die Förderelemente können besonders einfach und/oder dynamisch unabhängig geschwindigkeits- und/oder positionsgeregelt antreibbar sein. Die Zufuhrvorrichtung kann besonders leistungsfähig sein. Besonders bevorzugt enthalten Stützelemente ebenfalls zumindest einen Sekundärteil des Linearmotorsystems. Die Führungseinheit kann ein Primärteil enthalten, das sich entlang des gesamten Umlaufs der Förderelemente erstreckt. Bevorzugt enthält die Führungseinheit in Arbeitsabschnitten zumindest ein Primärteil, das zum geschwindigkeits- und/oder positionsgeregelten Antrieb der Förderelemente vorgesehen sind. Abschnitte des Umlaufs außerhalb von Arbeitsabschnitten können bevorzugt alternative Antriebsvorrichtungen für Förderelemente enthalten, insbesondere können die Förderelemente in zumindest in Teilen solcher Abschnitte durch Stau und/oder umlaufende Fördermittel, wie zum Beispiel Ketten und/oder Räder, durch Reib- und/oder Kraftschluss angetrieben werden. Abschnitte der Führungseinheit außerhalb von Arbeitsabschnitten können besonders kostengünstig sein. Weiter wird vorgeschlagen, dass die Steuereinheit dazu vorgesehen ist, Regelgrößen, insbesondere Antriebsströme der Förderelemente und/oder eine Regelabweichung der Förderelemente, insbesondere von Soll-/Istwerten von Positionen und/oder Geschwindigkeiten, zur Ermittlung eines Wartungszustands der Zufuhrvorrichtung zu nutzen. Insbesondere können im Mittel steigende Antriebsströme und/oder Regelabweichungen Hinweise auf eine Verschmutzung und/oder Abnutzung der Zufuhrvorrichtung und/oder auf Änderungen eines Magnetspalts zwischen Primär- und Sekundärteil und/oder den Verlust und/oder eine Beschädigung und/oder eine Abschwächung von Magneten des Sekundärteils sein. Die Steuereinheit kann bevorzugt eine beginnende Verschlechterung des Wartungszustands rechtzeitig vor einem Ausfall der Zufuhrvorrichtung erkennen. Der Wartungszustand kann einem Bediener signalisiert werden, so dass rechtzeitig Wartungsmaßnahmen eingeleitet werden können. Ungeplante Stillstände der Zufuhrvorrichtung durch mangelnde Wartung und/oder Defekte können reduziert werden.

Weiter wird vorgeschlagen, dass die Halter und/oder Gegenhalter dazu vorgesehen sind, Produkte und/oder Produktstapel aus einer zugeführten Produktkolonne zu separieren. Unter einer "Produktkolonne" soll in diesem Zusammenhang insbesondere ein endloser, bevorzugt horizontaler Stapel von Produkten verstanden werden. Die Produktkolonne kann zum Beispiel aus scheibenförmigen, horizontal gestapelten oder geschindelten Produkten, wie zum Beispiel Biskuits, bestehen. Die Produktkolonne wird bevorzugt entlang einer Zufuhrbahn zugeführt. Bevorzugt können der Halter und der Gegenhalter Produkte und/oder Produktstapel von der Produktkolonne separieren, indem der Halter und ein entgegen der Förderrichtung folgender Gegenhalter zwischen zwei Produkte der Produktkolonne geschoben werden. Der Halter kann aus der Produktkolonne ein Produkt und/oder einen Produktstapel abtrennen, indem er gegenüber dem Gegenhalter beschleunigt und einen Abstand herstellt. Der Gegenhalter sichert das Ende der Produktkolonne. Entgegen der Förderrichtung nachfolgende Halter/Gegenhalter können den nächsten Produktstapel abtrennen. Bevorzugt sind die Gegenhalter der Förderelemente mit Gegenhalter in einem Endbereich in Förderrichtung an den Förderelemente angeordnet. Bevorzugt sind die Halter der Förderelemente mit Halter in einem Endbereich entgegen der Förderrichtung an den Förderelemente angeordnet. Unter einem "Endbereich" des Förderelements soll in diesem Zusammenhang insbesondere ein Bereich verstanden werden, der sich ausgehend von einem Ende des Förderelements um weniger als 10%, bevorzugt weniger als 5% einer Länge des Förderelements in Richtung eines Zentrums des Förderelements erstreckt. Besonders bevorzugt begrenzen die Gegenhalter die Förderelemente mit Gegenhalter in Förderrichtung. Besonders bevorzugt begrenzen die Halter die Förderelemente mit Halter entgegen der Förderrichtung. Halter und Gegenhalter können so zu einem besonders geringen Abstand zusammengefahren werden. Ein Separieren der Produktkolonne durch Einschieben eines Halters und eines Gegenhalters kann erleichtert sein. Der Halter und/oder Gegenhalter kann am Förderelement bevorzugt in einer Richtung senkrecht zur Förderrichtung verschiebbar gelagert sein. Eine Kulissensteuerung und/oder ein Aktor kann dazu vorgesehen sein, den Halter im Produktübernahmebereich zwischen zwei Produkte der Produktkolonne zu bewegen. Halter und Gegenhalter können vorteilhaft zwischen zwei Produkte der Produktkolonne geschoben werden. In einer bevorzugten Ausgestaltung der Erfindung kann die Führungseinheit die Förderelemente zumindest in einem Teil des Produktübernahmebereichs entlang einer Bahn führen, die sich entlang einer Förderrichtung der Zufuhrbahn der Produktkolonne bevorzugt bezogen auf die Gewichtskraft von unten annähert. Die Förderelemente und Halter und Gegenhalter können sich bezogen auf die Gewichtskraft von unten den Produkten der Produktkolonne annähern und zwischen zwei Produkte der Produktkolonne gefahren werden, um diese zu separieren. Auf Aktoren zum Bewegen der Halter und/oder Gegenhalter zum Anheben und/oder Absenken der Halter und/oder Gegenhalter an den Förderelementen oder eine Kulissensteuerung kann verzichtet werden. Besonders bevorzugt kann ein Aktor und/oder eine Kulissensteuerung dazu vorgesehen sein, Gegenhalter und/oder Halter zumindest während des Eintauchens gegenüber den Förderelementen um einen Winkel zu schwenken. Es kann ein optimaler Winkel zwischen Halter und/oder Gegenhalter und Produkten der Produktkolonne während dem Einführen des Halters- und/oder Gegenhalters sichergestellt werden. Insbesondere kann der Halter und/oder Gegenhalter während des Einführens einen rechten Winkel zu einem Ende der Produktkolonne einnehmen. Die Produktkolonne kann besonders schonend separiert werden.

Weiter wird eine Verpackungsmaschine mit einer Zufuhrvorrichtung vorgeschlagen. Die Verpackungsmaschine kann besonders leistungsfähig sein.

Weiter wird ein Verfahren zum Zuführen von Produkten oder Produktstapeln zu einer Verpackungsmaschine mit der Zufuhrvorrichtung mit den beschriebenen Verfahrensmerkmalen vorgeschlagen. Produkte oder Produktstapel können mit den beschriebenen Vorteilen zugeführt werden.

### Zeichnung

Weitere Vorteile ergeben sich aus der folgenden Zeichnungsbeschreibung. In den Zeichnungen sind uner anderem Ausführungsbeispiele der Erfindung dargestellt. Nicht jedes der beschriebenen Ausführungsbeispiele ist ein Ausführungsbeispiel der Erfindung, alle Ausführungsbeispiele dienen jedoch dem Verständnis der Erfindung. Was Gegenstand der Erfindung ist, wird allein durch die Gegenstände der unabhängigen Ansprüche definiert.
Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigt:

- Fig. 1: eine schematische Darstellung einer Zufuhrvorrichtung in einem ersten Ausführungsbeispiel,
- Fig. 2: eine schematische Darstellung von Förderelementen und einem Stützelement einer erfindungsgemäßen_Zufuhrvorrichtung in einem zweiten Ausführungsbeispiel,
- Fig. 3: eine schematische Darstellung der Förderelemente und des Stützelements des erfindungsgemäßen Ausführungsbeispiels in einer Draufsicht,
- Fig. 4: eine schematische Darstellung von Förderelementen einer Variante des erfindungsgemäßen Ausführungsbeispiels in einer Draufsicht,
- Fig. 5: eine schematische Darstellung einer Zufuhrvorrichtung in einem dritten Ausführungsbeispiel,
- Fig. 6: eine schematische Darstellung einer Zufuhrvorrichtung in einem vierten Ausführungsbeispiel,
- Fig. 7: eine schematische Darstellung von Förderelementen einer Zufuhrvorrichtung in einem fünften Ausführungsbeispiel,
- Fig. 8: eine schematische Darstellung einer Zufuhrvorrichtung in einem sechsten Ausführungsbeispiel,
- Fig. 9: eine schematische Darstellung einer Zufuhrvorrichtung in einem siebten Ausführungsbeispiel,
- Fig. 10: eine schematische Darstellung einer Zufuhrvorrichtung in einem achten Ausführungsbeispiel,
- Fig. 11: eine schematische Darstellung einer Zufuhrvorrichtung in einem neunten Ausführungsbeispiel,
- Fig. 12: eine schematische Darstellung einer Zufuhrvorrichtung in einem zehnten Ausführungsbeispiel,
- Fig. 13: eine schematische Darstellung einer Zufuhrvorrichtung in einem elften Ausführungsbeispiel und

- Fig. 14: eine weitere schematische Darstellung der Zufuhrvorrichtung des elften Ausführungsbeispiels.

### Beschreibung der Ausführungsbeispiele

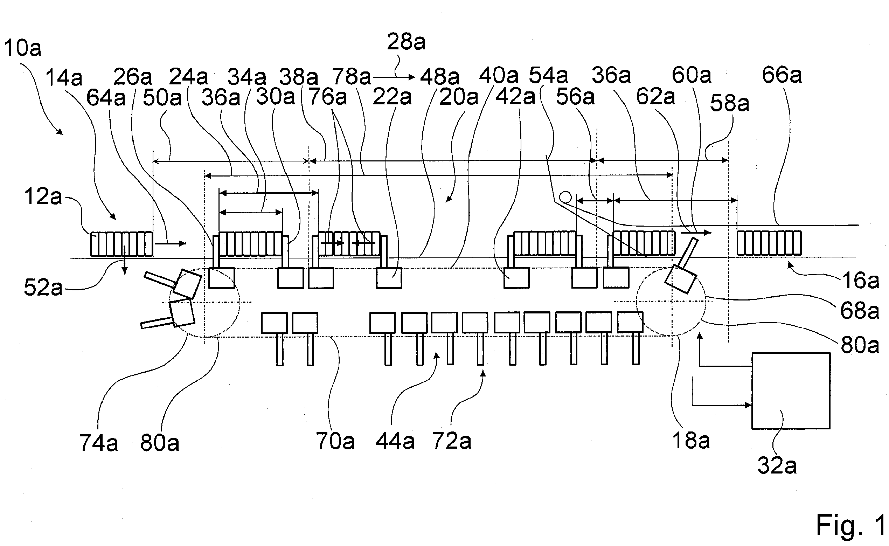

Figur 1 zeigt eine Zufuhrvorrichtung 10a zum Zuführen von Produkten 12a oder Produktstapeln 14a zu einem Verpackungsprozess einer hier nur angedeuteten Verpackungsmaschine 16a mit einer als geschlossene Schleife 18a ausgebildeten Führungseinheit 20a, auf welcher eine Vielzahl angeordneter Förderelemente 22a entlang eines Arbeitsabschnitts 24a der Führungseinheit 20a in und entgegen einer Förderrichtung 28a voneinander unabhängig geschwindigkeits- und/oder positionsgeregelt antreibbar angeordnet sind. Die Förderelemente 22a sind um die Führungseinheit 20a in Förderrichtung 28a im Umlauf.

Die Zufuhrvorrichtung 10a weist eine in einer Verpackungsrichtung 62a ausgerichtete Zufuhrstrecke 78a auf, die einen Produktübernahmebereich 50a, einen Pufferabschnitt 38a und einen Produktabgabebereich 58a umfasst. Die Förderelemente 22a weisen jeweils einen Halter 26a oder einen Gegenhalter 30a auf. Die zu verpackenden Produkte 12a werden von einem hier nicht näher dargestellten Transportsystem in einer Übernahmegeschwindigkeit 64a auf eine Auflagefläche 48a in den Produktübernahmebereich 50a der Zufuhrvorrichtung 10a geschoben. Dem Fachmann sind verschiedene Ausbildungen eines geeigneten Transportsystems bekannt, zum Beispiel Bandsysteme. Eine Anzahl Produkte 12a, im gezeigten Beispiel jeweils 8, bilden jeweils einen gegenüber einer Gewichtskraft 52a horizontalen Produktstapel 14a. Die Produktstapel 14a weisen eine Produktstapellänge 34a in Förderrichtung 28a auf. Die Produktstapel 14a werden jeweils an ihrem der Förderrichtung 28a abgewandten Ende durch den Halter 26a auf der Auflagefläche 48a in Förderrichtung 28a geschoben. Die Auflagefläche 48a weist eine in Förderrichtung 28a orientierte Ausnehmung auf, durch die die Halter 26a und Gegenhalter 30a ragen. Die Halter 26a und Gegenhalter 30a werden bei der Produktübernahme mit den angelieferten Produktstapeln 14a synchronisiert. Position und Geschwindigkeit der Förderelemente 22a entlang der Förderrichtung 28a werden von einer Steuereinheit 32a individuell geregelt. Die Steuereinheit 32a ist dazu vorgesehen, die Produktstapellänge 34a und eine Teilung 36a zwischen in Förderrichtung 28a aufeinander folgenden Produktstapeln 14a zu steuern und zu regeln. Die Steuereinheit 32a ist dazu vorgesehen, die Produktstapellängen 34a zu ermitteln. Zu diesem Zweck verringert die Steuereinheit 32a einen Abstand zwischen Halter 26a und Gegenhalter 30a eines Produktstapels 14a so lange, bis der Produktstapel 14a, sobald der Abstand der Produktstapellänge 34a entspricht, einen Widerstand auf den Halter 26a und den Gegenhalter 30a ausübt. Der Widerstand entspricht einer Andruckkraft 76a zwischen Halter 26a, Gegenhalter 30a und Produktstapel 14a. Die Andruckkraft 76a bewirkt eine Erhöhung von zum Antrieb der Förderelemente 22a notwendigen Antriebsströme, was durch die Steuereinheit 32a erkannt wird und zum Ermitteln der Produktstapellänge 34a genutzt wird. Um die Förderelemente 22a zu synchronisieren, verfügt die Steuereinheit 32a über hier nicht dargestellte Sensoren, mit denen sie die Übernahmegeschwindigkeit 64a und Position der angelieferten Produktstapel 14a detektiert und Geschwindigkeit und Position der Förderelemente 22a entsprechend abstimmt. Ein der Förderrichtung 28a zugewandtes Ende der Produktstapel 14a wird durch einen Gegenhalter 30a gesichert. Halter 26a und Gegenhalter 30a sind im gezeigten Beispiel baugleich ausgeführt und unterscheiden sich durch ihre Funktion während der Produktzufuhr. Jeder Produktstapel 14a wird so zwischen einem unabhängig angetriebenen Halter 26a und Gegenhalter 30a transportiert. In Förderrichtung 28a aufeinander folgende Halter 26a weisen einen Teilung 36a genannten Produktabstand auf. Die Teilung 36a definiert gemeinsam mit der Produktstapellänge 34a eine verbleibende Lücke 56a zwischen aufeinander folgenden Produktstapeln 14a. Die Teilung 36a wird von der Steuereinheit 32a im Produktübernahmebereich 50a, Produktabgabebereich 58a und Pufferabschnitt 38a unabhängig eingestellt. Vom Produktübernahmebereich 50a werden die Produktstapel 14a zwischen Haltern 26a und Gegenhalter 30a in der Förderrichtung 28a in Richtung des Produktabgabebereichs 58a geschoben. Zwischen Produktübernahmebereich 50a und Produktabgabereich 58a ist der Pufferabschnitt 38a angeordnet. Beim Produktabgabebereich 58a werden die Produktstapel 14a positionssynchron mit der für den Verpackungsprozess erforderlichen Teilung 36a und einer Verpackungsgeschwindigkeit 60a der Verpackungsrichtung 62a an den Verpackungsprozess übergeben. Im Bereich des Pufferabschnitts 38a variiert die Steuereinheit 32a die Teilung 36a zwischen den Produktstapeln 14a abhängig von einer Fluktuation zwischen Übernahmegeschwindigkeit 64a und Verpackungsgeschwindigkeit 60a. Eine Länge des Pufferabschnitts 38a in Förderrichtung 28a wird vom Fachmann so ausgelegt, dass im Pufferabschnitt 38a eine ausreichende Anzahl von Produktstapeln 14a gepuffert werden können, um die auftretenden Fluktuationen auszugleichen. Insbesondere können durch den Pufferabschnitt 38a sogenannten Leerteilungen bei der Produktübernahme kompensiert werden. Wenn der Zufuhrvorrichtung 10a keine Produkte 12a angeliefert werden, warten die Förderelemente 22a im Produktübernahmebereich 50a bis die nächsten Produkte 12a angeliefert werden. Während dieser Zeit können weiter Produktstapel 14a an die Verpackungsmaschine 16a abgegeben werden, so lange Produktstapel 14a im Pufferabschnitt 38a verfügbar sind.

Die Verpackungsmaschine 16a ist als horizontale Schlauchpackmaschine ausgebildet. Die Zufuhrvorrichtung 10a ist an der Verpackungsmaschine 16a in Richtung der Gewichtskraft 52a höhenverstellbar angeordnet. Im Produktabgabereich 58a der Zufuhrvorrichtung 10a wird durch die Verpackungsmaschine 16a um die Produktstapel 14a aus einer Folienbahn 54a ein Folienschlauch 66a gebildet. Ein Umlenkbereich 68a der Zufuhrvorrichtung 10a ist so angeordnet, dass der Gegenhalter 30a des zu verpackenden Produktstapels 14a vor dem Verschließen des Folienschlauchs 66a bezogen auf die Gewichtskraft 52a 180° nach unten um den Umlenkbereich 68a auf eine Rückfuhrstrecke 70a der Zufuhrvorrichtung 10a umgelenkt wird. Der Halter 26a gibt den Produktstapel 14a, sobald dieser auf dem Folienschlauch 66a liegt, frei, in dem er abgebremst oder kurz entgegen der Förderrichtung 28a bewegt wird. Anschließend wird der Halter 26a ebenfalls wieder in Förderrichtung 28a bewegt und um den Umlenkbereich 68a auf die Rückfuhrstrecke 70a umgelenkt. So kann vermieden werden, dass der Halter 26a beim Umlenken gegen den Produktstapel 14a drückt und diesen verschiebt. Die Rückfuhrstrecke 70a weist einen weiteren Pufferabschnitt 72a auf, der dazu vorgesehen ist, die Förderelemente 22a zu puffern. Abhängig von der Teilung 36a, der Produktstapellänge 34a und einer Anzahl von Produktstapeln 14a im Pufferabschnitt 38a wird eine variable Anzahl von Förderelementen 22a für den Transport der Produktstapel 14a vom Produktübernahmebereich 50a bis zum Produktabgabebereich 58a benötigt. Überzählige Förderelemente 22a werden im Pufferabschnitt 72a gepuffert. Die Förderelemente 22a werden entlang der Rückfuhrstrecke 70a entgegen der Förderrichtung 28a zu einem weiteren Umlenkbereich 74a transportiert und durch den Umlenkbereich 74a synchronisiert mit den angelieferten Produktstapeln 14a wiederum um 180° in den Produktübernahmebereich 50a umgelenkt.

Zum Antrieb der Förderelemente 22a enthalten die Führungseinheit 20a Primärteile 40a und die Förderelemente 22a Sekundärteile 42a eines Linearmotorsystems 44a. Die Führungseinheit 20a weist in Förderrichtung 28a entlang der Zufuhrstrecke 78a und der Rückfuhrstrecke 70a hier nicht näher dargestellte, Pole des Linearmotorsystems 44a bildende Elektromagnete auf, die jeweils Primärteile 40a bilden. Die Elektromagnete können durch die Steuereinheit 32a individuell angesteuert werden. Die Förderelemente 22a weisen ebenfalls nicht näher dargestellte Permanentmagnete und somit den Sekundärteil 42a des Linearmotorsystems 40a auf. Weiter weist die Führungseinheit 20a ein nicht näher dargestelltes Wegmesssystem auf, mit dem Geschwindigkeit und Position der Förderelemente 22a individuell bestimmt und an die Steuereinheit 32a übermittelt werden können. Die Steuereinheit 32a kann somit die Position und Geschwindigkeit der Förderelemente 22a individuell regeln. Solche Linearmotorsysteme 44a sind dem Fachmann unter anderem aus dem genannten Stand der Technik bekannt. Die Umlenkung in den Umlenkbereichen 68a und 74a sind passiv ausgeführt. In den Umlenkbereichen 68a und 74a werden die Förderelemente 22a durch Kraftschluss mit in den Umlenkbereichen 68a und 74a angeordneten, rotierenden, mit Magneten ausgestatteten Umlenkrädern 80a transportiert. Anschließend treten die Förderelemente 22a wieder in die Zufuhrstrecke 78a beziehungsweise Rückfuhrstrecke 70a ein, wo sie durch die Steuereinheit 32a positions- und geschwindigkeitsgeregelt antreibbar sind. Um Kosten zu sparen, ist es auch möglich, dass die Förderelemente 22a in Teilen der Pufferabschnitte 38a und/oder 72a auf Stau gefahren werden, so dass in diesen Bereichen der Primärteil 40a des Linearmotorsystems 44a unterbrochen werden kann. Der Fachmann wird eine für die jeweilige Anwendung günstige Ausbildung des Linearmotorsystems 44a wählen.

Die nachfolgende Beschreibung und die Zeichnungen weiterer Ausführungsbeispiele beschränkt sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele verwiesen werden kann. Zur Unterscheidung der Ausführungsbeispiele sind anstelle des Buchstabens a des ersten Ausführungsbeispiels die Buchstaben b bis k den weiteren Ausführungsbeispielen nachgestellt.

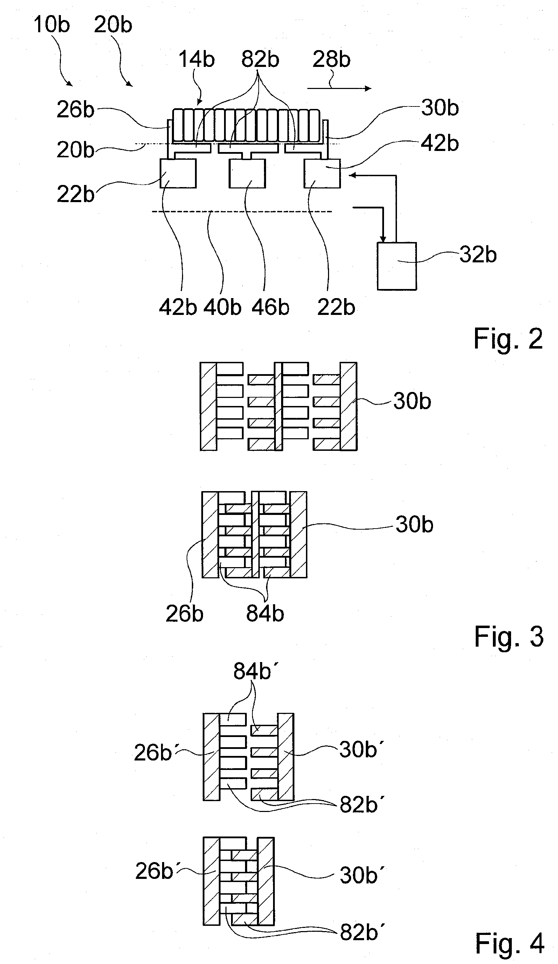

Figur 2 und Figur 3 zeigen einen Ausschnitt einer erfindungsgemäßen Zufuhrvorrichtung 10b mit Förderelementen 22b mit einem Halter 26b und einem Gegenhalter 30b in einem zweiten Ausführungsbeispiel. Die Fördereinrichtung 10b unterscheidet sich vom ersten Ausführungsbeispiel insbesondere dadurch, dass auf einer Führungseinheit 20b zwischen den den Halter 26b und den Gegenhalter 30b aufweisenden Förderelementen 22b ein Stützelement 46b angeordnet ist. Das Stützelement 46b ist, wie die Förderelemente 22b, als Sekundärteil 42b eines Linearmotorsystems 44b ausgebildet und ist durch eine Steuereinheit 32b positions- und geschwindigkeitsgeregelt antreibbar. Alternativ kann das Stützelement 46b auch passiv auf der Führungseinheit 20b angeordnet sein und durch die Förderelemente 22b gezogen und/oder gestoßen werden. Das Stützelement 46b sowie der Halter 26b und der Gegenhalter 30b weisen Stützflächen 82b auf, mit denen es Produktstapel 14b zwischen den Förderelementen 22b unterstützt. Aufeinander zugewandte Abschlusskanten der Stützflächen 82b von Halter 26b, Gegenhaltern 30b und Stützelement 46b sind als ineinandergreifende Kämme 84b ausgebildet (Figur 3), so dass der Produktstapel 14b zwischen Halter 26b und Gegenhalter 30b durchgehend gestützt wird. Durch die Kämme 84b können unterschiedliche Produktstapellängen 34b zwischen Halter 26b und Gegenhalter 30b bei durchgehender Stützung eingestellt werden. Eine Auflagefläche der Zufuhrvorrichtung 10b, über die die Produktstapel 14b geschoben werden, kann so entfallen. Die Produktstapel 14b werden schonend von den Förderelementen 22b und Stützelementen 46b getragen. Fig. 4 zeigt eine Variante des erfindungsgemäßen Ausführungsbeispiels, bei dem das Stützelement entfällt und Halter 26b' und Gegenhalter 30b' jeweils Kämme 84b' aufweisen, die Stützflächen 82b' bilden. Diese Variante ist insbesondere für kurze Produktstapellängen geeignet.

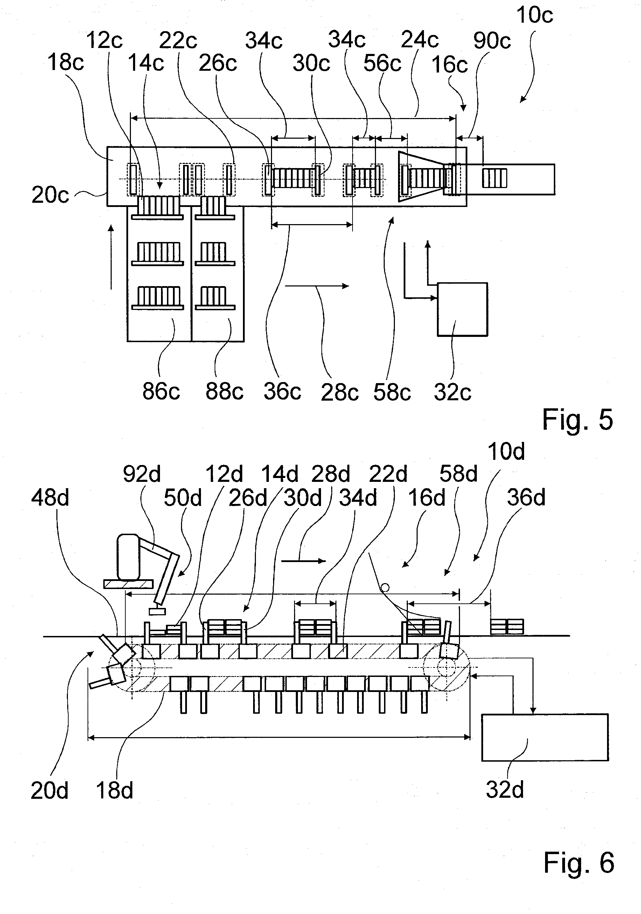

Figur 5 zeigt eine Zufuhrvorrichtung 10c zum Zuführen von Produkten 12c oder Produktstapeln 14c zu einem Verpackungsprozess einer hier nur angedeuteten Verpackungsmaschine 16c mit einer als geschlossene Schleife 18c ausgebildeten Führungseinheit 20c, auf welcher eine Vielzahl angeordneter Förderelemente 22c entlang eines Arbeitsabschnitts 24c der Führungseinheit 20c in und entgegen einer Förderrichtung 28c voneinander unabhängig geschwindigkeits- und/oder positionsgeregelt antreibbar angeordnet sind, in einem dritten Ausführungsbeispiel. Die Zuführvorrichtung 10c unterscheidet sich vom ersten Ausführungsbeispiel insbesondere dadurch, dass eine Steuereinheit 32c dazu vorgesehen ist, Produktstapellängen 34c und eine Teilung 36c von in Förderrichtung 28c aufeinanderfolgenden Produktstapeln 14c variabel einzustellen. Über zwei Querketten 86c und 88c werden der Zufuhrvorrichtung 10c Produktstapel 14c unterschiedlicher Länge zugeführt, wobei im gezeigten Beispiel die Querkette 86c Produktstapel 14c mit jeweils sieben Produkten 12c und die Querkette 88c Produktstapel 14c mit jeweils vier Produkten 12c zuführt. Die Querketten 86c und 88c schieben die Produktstapel 14c jeweils im rechten Winkel zur Förderrichtung 28c zwischen im richtigen Abstand wartende Halter 26c und Gegenhalter 30c. Sobald die Produktstapel 14c eingeschoben sind, transportieren die die Halter 26c und Gegenhalter 30c tragenden Förderelemente 22c die Produktstapel 14c in Förderrichtung 28c zu einem Produktabgabereichs 58c, wo sie von einer Verpackungsmaschine 16c übernommen werden. Die wartenden Halter 26c und Gegenhalter 30c können nach der Übernahme der Produktstapel 14c mit wachsender Beschleunigung beschleunigt werden. Die Produktstapel 14c können besonders produktschonend behandelt werden. Die Steuereinheit 32c stellt die Teilung 36c aufeinander folgender Halter 26c entsprechend ein, so dass sich zwischen den Produktstapeln 14c gleiche Packungsabstände 90c und zwischen Haltern 26c und Gegenhaltern 30c gleiche Lücken 56c ergeben. Alternativ können die Produktstapel 14c durch eine nicht dargestellte Übergabevorrichtung an Halter 26c und Gegenhalter 30c übergeben werden, indem sie bereits durch die Übergabevorrichtung in Förderrichtung 28c beschleunigt werden. Halter 26c und Gegenhalter 30c müssen nicht gestoppt werden, so dass eine höhere Verpackungsleistung möglich sein kann.

Figur 6 zeigt eine Zufuhrvorrichtung 10d zum Zuführen von Produkten 12d oder Produktstapeln 14d zu einem Verpackungsprozess einer hier nur angedeuteten Verpackungsmaschine 16d mit einer als geschlossene Schleife 18d ausgebildeten Führungseinheit 20d, auf welcher eine Vielzahl angeordneter Förderelemente 22d entlang eines Arbeitsabschnitts 24d der Führungseinheit 20d in und entgegen einer Förderrichtung 28d voneinander unabhängig geschwindigkeits- und/oder positionsgeregelt antreibbar angeordnet sind, in einem vierten Ausführungsbeispiel. Die Zuführvorrichtung 10d unterscheidet sich vom ersten Ausführungsbeispiel insbesondere dadurch, dass Halter 26d und Gegenhalter 30d jeweils zwei vertikale, nebeneinander angeordnete Produktstapel 14d transportieren. Anstelle von Produktstapeln 14d können auch nebeneinander liegende Packungen transportiert werden, die Produktstapel enthalten können. Die Produktstapel 14d weisen im gezeigten Beispiel jeweils drei Produkte 12d auf. Die Produktstapel 14d werden in einem Produktübernahmebereich 50d von einem Befüllroboter 92d zwischen dem Halter 26d und dem Gegenhalter 30d auf einer Auflagefläche 48d der Zufuhrvorrichtung 10d aus einzelnen Produkten 12d aufgeschichtet. Es ist auch möglich, eine andere Anzahl Produkte 12d auf einem Produktstapel 14d zu stapeln oder eine andere Anzahl von Produktstapeln 14d nebeneinander zwischen dem Halter 26d und dem Gegenhalter 30d anzuordnen. Eine Steuereinheit 32d passt einen Abstand zwischen Halter 26d und Gegenhalter 30d einer entsprechenden Produktstapellänge 34d an, wobei unter der Produktstapellänge 34d die Erstreckung der nebeneinander liegenden Produktstapel 14d in Förderrichtung 28d verstanden werden soll. Der Abstand kann auch vor, während und nach jeder Beladung von Produktstapeln 14d an die Anzahl der bereits geladenen Produktstapel 14d angepasst werden. Ebenfalls kann der Abstand beim Beladen leicht vergrößert werden, so dass mehr Platz beim Beladen vorhanden ist. Die zwischen Halter 26d und Gegenhalter 30d transportierten Produktstapel 14d werden der Verpackungsmaschine 16d als Gruppe übergeben und in einer Packung gemeinsam verpackt.

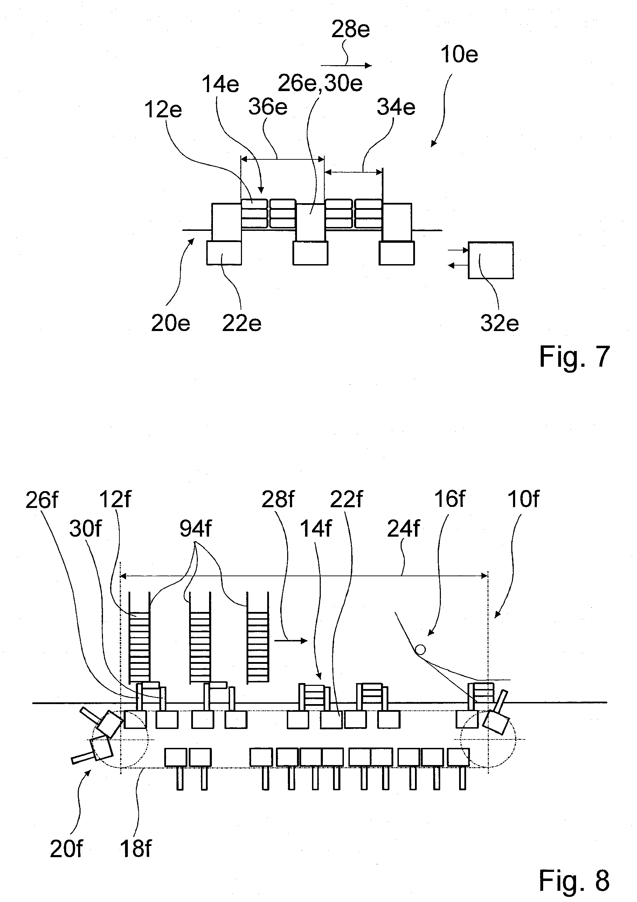

Figur 7 zeigen einen Ausschnitt einer Zufuhrvorrichtung 10e mit Förderelementen 22e mit einem Halter 26e und einem Gegenhalter 30e in einem fünften Ausführungsbeispiel. Die Fördereinrichtung 10e unterscheidet sich vom vierten Ausführungsbeispiel insbesondere dadurch, dass die Förderelemente 22e jeweils den Halter 26e und den Gegenhalter 30e aufweisen, wobei Halter 26e und Gegenhalter 30e einstückig ausgebildet sind. Eine Produktstapellänge 34e in Förderrichtung 28e kann durch eine Steuereinheit 32e individuell eingestellt werden, abhängig von einer Anzahl Produkte 12e und/oder Produktstapeln 14e, die zwischen Halter 26e und Gegenhalter 30e transportiert werden, wobei sowohl horizontale als auch vertikale Produktstapel 14e zulässig sind. Eine Teilung 36e zwischen aufeinander folgenden Haltern 26e wird bei der Zufuhrvorrichtung 10e durch die Produktstapellängen 34e bestimmt und ist nicht unabhängig von der Produktstapellänge 34e einstellbar. Die Zufuhrvorrichtung 10e benötigt gegenüber den Zufuhrvorrichtungen der weiteren Ausführungsbeispiele nur die halbe Anzahl der Förderelemente 22e.

Figur 8 zeigt eine Zufuhrvorrichtung 10f zum Zuführen von Produkten 12f oder Produktstapeln 14f zu einem Verpackungsprozess einer hier nur angedeuteten Verpackungsmaschine 16f mit einer als geschlossene Schleife 18f ausgebildeten Führungseinheit 20f, auf welcher eine Vielzahl angeordneter Förderelemente 22f entlang eines Arbeitsabschnitts 24f der Führungseinheit 20f in und entgegen einer Förderrichtung 28f voneinander unabhängig geschwindigkeits- und/oder positionsgeregelt antreibbar angeordnet sind, in einem sechsten Ausführungsbeispiel. Die Zufuhrvorrichtung 10f unterscheidet sich von der Zufuhrvorrichtung 10d des vierten Ausführungsbeispiels insbesondere dadurch, dass die Produkte 12f aus drei Schächten 94f zwischen Haltern 26f und Gegenhaltern 30f zu vertikalen Produktstapeln 14f aufgestapelt werden, wobei zwischen jedem Halter 26f und Gegenhalter 30f im gezeigten Beispiel ein Produktstapel 14f zu drei Produkten 12f gebildet wird. Jeder der drei Schächte 94f spendet dabei ein Produkt 12f, während die Halter 26f und Gegenhalter 30f die Produktstapel 14f in Förderrichtung 28f unter den Schächten 94f vorbeitransportieren. Die Förderelemente 22f stoppen unter den Schächten 94f die Produktstapel 14f kurz, um ein Ablegen der Produkte 12f durch die Schächte 94f zu vereinfachen. Anschließend beschleunigen die Förderelemente 22f mit wachsender Beschleunigung, um die Produkte 12f schonend zu behandeln. Alternativ kann der Halter 26f ein Produkt 12f aus dem Schacht 94f abziehen, indem er kurz vor dem Berühren des Produkts 12f abbremst und nach dem Berühren wieder beschleunigt. Dies bewirkt ein besonders schonendes Abziehen der Produkte 12f. Vorzugsweise wird der Abstand zwischen Halter 26f und Gegenhalter 30f beim Abziehen aus dem Schacht 94f kurzzeitig vergrößert. Weiter ist es möglich, dass aus einem Schacht 94f mit einer reversierenden Bewegung des Halters 26f in und entgegen der Förderrichtung 28f ein Produktstapel 14f durch wiederholtes Abziehen eines Produkts 12f aus dem Schacht 94f gebildet wird. Der Gegenhalter 30f kann ebenfalls eine reversierende Bewegung ausüben.

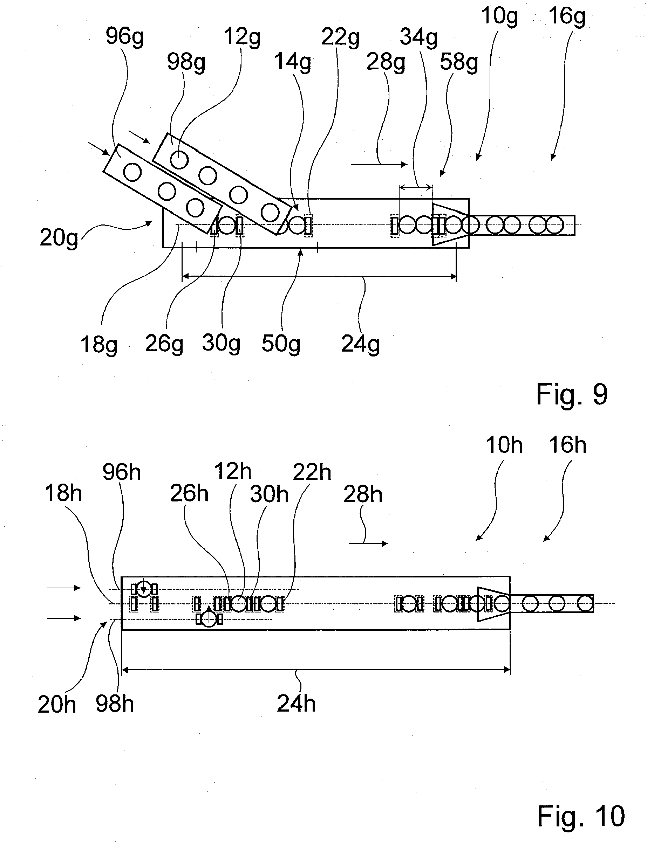

Figur 9 zeigt eine Zufuhrvorrichtung 10g zum Zuführen von Produkten 12g oder Produktstapeln 14g zu einem Verpackungsprozess einer hier nur angedeuteten Verpackungsmaschine 16g mit einer als geschlossene Schleife 18g ausgebildeten Führungseinheit 20g, auf welcher eine Vielzahl angeordneter Förderelemente 22g entlang eines Arbeitsabschnitts 24g der Führungseinheit 20g in und entgegen einer Förderrichtung 28g voneinander unabhängig geschwindigkeits- und/oder positionsgeregelt antreibbar angeordnet sind, in einem siebten Ausführungsbeispiel. Die Zufuhrvorrichtung 10g unterscheidet sich von der Zufuhrvorrichtung 10d des vierten Ausführungsbeispiels insbesondere dadurch, das die Produkte 12g von zwei diagonal zur Förderrichtung 28g angeordneten Zufuhrbahnen 96g und 98g in den Produktübernahmebereich 50g zugeführt werden. Zunächst wird durch die Zufuhrbahn 96g ein erster Produktstapel 14g zwischen einem Halter 26g und einem Gegenhalter 30g gebildet. Der Produktstapel 14g wird vom Halter 26g und Gegenhalter 30g zur zweiten Zufuhrbahn 98g gebracht, woraufhin ein Abstand zwischen Halter 26g und Gegenhalter 30g vergrößert wird, so dass nun in Förderrichtung 28g neben dem ersten Produktstapel 14g ein zweiter Produktstapel 14g gebildet werden kann. Eine Produktstapellänge 34g entspricht nun im gezeigten Beispiel zwei nebeneinander liegenden Produkten 12g. Die Produktstapel 14g werden weiter wie beschrieben der Verpackungsmaschine 16g zugeführt. Alternativ kann auch ein Produktstapel 14g gebildet werden, indem die Zufuhrbahnen 96g und 98g nacheinander jeweils ein Produkt 12g zwischen einem Halter 26g und einem Gegenhalter 30g ablegen.

Figur 10 zeigt eine Zufuhrvorrichtung 10h zum Zuführen von Produkten 12h zu einem Verpackungsprozess einer hier nur angedeuteten Verpackungsmaschine 16h mit einer als geschlossene Schleife 18h ausgebildeten Führungseinheit 20h, auf welcher eine Vielzahl angeordneter Förderelemente 22h entlang eines Arbeitsabschnitts 24h der Führungseinheit 20h in und entgegen einer Förderrichtung 28h voneinander unabhängig geschwindigkeits- und/oder positionsgeregelt antreibbar angeordnet sind, in einem achten Ausführungsbeispiel. Die Zufuhrvorrichtung 10h unterscheidet sich von der Zufuhrvorrichtung 10g des siebten Ausführungsbeispiels insbesondere dadurch, dass die Produkte 12h von zwei in gegenüber der Förderrichtung 28h seitlich der Förderelemente 22h angeordneten Zufuhrbahnen 96h und 98h quer zwischen Halter 26h und Gegenhalter 30h geschoben werden. Es werden so die Produkte 12h der zwei Zufuhrbahnen 96h und 98h zusammengefasst. Im gezeigten Beispiel werden keine Produktstapel gebildet, stattdessen wird zwischen Halter 26h und Gegenhalter 30h jeweils ein einzelnes Produkt 12h gebracht, welches von der Verpackungsmaschine 16h verpackt wird. Alternativ können die Zufuhrbahnen 96h und 98h Produktstapel zuführen, die auf die gezeigte Art zwischen Halter 26h und Gegenhalter 30h gebracht werden.

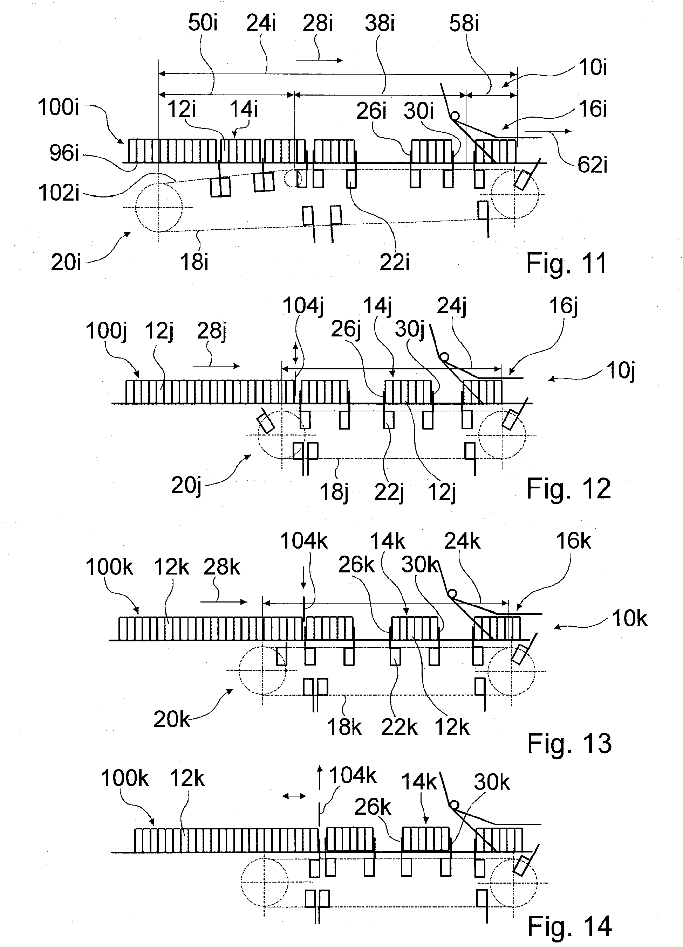

Figur 11 zeigt eine Zufuhrvorrichtung 10i zum Zuführen von Produkten 12i oder Produktstapeln 14i zu einem Verpackungsprozess einer hier nur angedeuteten Verpackungsmaschine 16i mit einer als geschlossene Schleife 18i ausgebildeten Führungseinheit 20i, auf welcher eine Vielzahl angeordneter Förderelemente 22i entlang eines Arbeitsabschnitts 24i der Führungseinheit 20i in und entgegen einer Förderrichtung 28i voneinander unabhängig geschwindigkeits- und/oder positionsgeregelt antreibbar angeordnet sind, in einem neunten Ausführungsbeispiel. Die Zufuhrvorrichtung 10i unterscheidet sich vom ersten Ausführungsbeispiel insbesondere dadurch, dass Halter 26i und Gegenhalter 30i dazu vorgesehen sind, Produktstapel 14i aus einer zugeführten Produktkolonne 100i zu separieren. Die endlose Produktkolonne 100i wird entlang einer Zufuhrbahn 96i parallel zu einer Verpackungsrichtung 62i zugeführt. In einem Produktübernahmebereich 50i führt die Führungseinheit 20i die Förderelemente 22i entlang einer sich der Zufuhrbahn 96i entlang der Förderrichtung 28i annähernden Bahn 102i. Förderelemente 22i mit einem Halter 26i und in Förderrichtung jeweils folgende Förderelemente 22i mit einem Gegenhalter 30i werden im Produktübernahmebereich 50i zusammengefahren, so dass Halter 26i und Gegenhalter 30i sich berühren. Die Halter 26i begrenzen die Förderelemente 22i mit Halter 26i entgegen der Förderrichtung 28i. Die Gegenhalter 30i begrenzen die Förderelemente 22i mit Gegenhalter 30i in Förderrichtung 28i. Die Halter 26i und Gegenhalter 30i nähern sich der Produktkolonne 100i an, bis Halter 26i und Gegenhalter 30i zwischen zwei Produkte 12i der Produktkolonne 100i geschoben werden. Der Halter 26i trennt nun einen Produktstapel 14i ab, indem der Halter 26i und der in Förderrichtung 28i dem Halter 26i folgende, am Produktstapel 14i anliegende Gegenhalter 30i in Förderrichtung 28i beschleunigt werden, so dass zwischen dem Produktstapel 14i und der Produktkolonne 100i ein Abstand entsteht. Der nächste, vom Halter 26i entgegen der Förderrichtung 28i angeordnete Gegenhalter 30i sichert das Ende der Produktkolonne 100i und bildet mit dem nächsten Halter 26i entgegen der Förderrichtung 28i den nächsten Produktstapel 14i. Es ist auf dieselbe Art auch möglich, einzelne Produkte 12i zu separieren. Im Bereich eines Pufferabschnitts 38i und eines in Förderrichtung 28i folgenden Produktabgabebereichs 58i führt die Führungseinheit 20i die Förderelemente 22i parallel zur Verpackungsrichtung 62i weiter dem Verpackungsprozess zu.

Figur 12 zeigt eine Zufuhrvorrichtung 10j zum Zuführen von Produkten 12j oder Produktstapeln 14j zu einem Verpackungsprozess einer hier nur angedeuteten Verpackungsmaschine 16j mit einer als geschlossene Schleife 18j ausgebildeten Führungseinheit 20j, auf welcher eine Vielzahl angeordneter Förderelemente 22d entlang eines Arbeitsabschnitts 24j der Führungseinheit 20j in und entgegen einer Förderrichtung 28j voneinander unabhängig geschwindigkeits- und/oder positionsgeregelt antreibbar angeordnet sind, in einem zehnten Ausführungsbeispiel. Die Zufuhrvorrichtung 10j unterscheidet sich vom ersten Ausführungsbeispiel insbesondere dadurch, dass ein Separiermesser 104j dazu vorgesehen ist, Produktstapel 14j aus einer zugeführten Produktkolonne 100j zu separieren. Das Separiermesser 104j wird von der der Führungseinheit 20j abgewandten Seite zwischen zwei Produkte 12j der Produktkolonne 100j eingeführt. Halter 26j und Gegenhalter 30j sind an den Förderelementen 22j durch eine hier nicht näher dargestellte Kulissensteuerung in Richtung der Förderelemente 22j absenkbar angeordnet. In einem Produktübergabebereich 50j wird ein der Förderrichtung 28j zugewandtes Ende der Produktkolonne 100j durch das Separiermesser 104j gesichert. Ein Gegenhalter 30j wird an das Ende angelegt. Das Separiermesser 104j wird in Richtung der der Führungseinheit 20j abgewandten Seite der Produktkolonne 100j zurückgezogen. Die Produktkolonne 100j bewegt sich mit dem Gegenhalter 30j in Förderrichtung 28j bis eine einem Produktstapel 14j entsprechende Anzahl Produkte 12j erreicht ist. Das Separiermesser 104j wird zwischen zwei Produkte 12j der Produktkolonne 100j eingefahren und sichert das Ende der Produktkolonne 100j. Ein dem Gegenhalter 30j des separierten Produktstapels 14j entgegen der Förderrichtung 28j folgender Halter 26j wird in Richtung des Produktstapels 14j ausgefahren und sichert den Produktstapel 14j, während der entgegen der Förderrichtung 28j folgende Gegenhalter 30j ebenfalls in Richtung des Produktstapels 14j ausgefahren wird und das neue Ende der Produktkolonne 100j sichert, so dass das Separiermesser 104j wieder zurückgezogen werden kann. Während einer Zeitdauer, in der das Separiermesser 104j in die Produktkolonne 100j eingefahren ist, wird das Ende der Produktkolonne 100j durch das Separiermesser 104j gestoppt. Halter 26j und Gegenhalter 30j des zu separierenden Produktstapels 14j werden von den Förderelementen 22j in Förderrichtung 28j beschleunigt und der Produktstapel 14j separiert. Die weiteren Produktstapel 14j werden entsprechend gebildet.

Figur 13 und Figur 14 zeigen eine Zufuhrvorrichtung 10k zum Zuführen von Produkten 12k oder Produktstapeln 14k zu einem Verpackungsprozess einer hier nur angedeuteten Verpackungsmaschine 16k mit einer als geschlossene Schleife 18k ausgebildeten Führungseinheit 20k, auf welcher eine Vielzahl angeordneter Förderelemente 22k entlang eines Arbeitsabschnitts 24k der Führungseinheit 20k in und entgegen einer Förderrichtung 28k voneinander unabhängig geschwindigkeits- und/oder positionsgeregelt antreibbar angeordnet sind, in einem elften Ausführungsbeispiel. Die Zufuhrvorrichtung 10k unterscheidet sich vom zehnten Ausführungsbeispiel insbesondere dadurch, dass ein Separiermesser 104k in Förderrichtung 28k beweglich gelagert ist. Das Separiermesser 104k wird zwischen zwei Produkte 12k der Produktkolonne 100k geschoben und bewegt sich gleichzeitig mit der Produktkolonne 100k in Förderrichtung 28k. Ein Halter 26k wird von der dem Separiermesser 104k gegenüberliegenden Seite zwischen vom Separiermesser 104k separierten Produkte 12k der Produktkolonne 100k geschoben (Figur 13). Der Halter 26k beschleunigt gemeinsam mit einem in Förderrichtung 28k den separierten Produktstapel 14k folgenden Gegenhalter 30k den Produktstapel 14k in Förderrichtung 28k. Ein entgegen der Förderrichtung 28k folgender Gegenhalter 30k wird an das neue Ende der Produktkolonne 100k angelegt (Figur 14). Das Separiermesser 104k wird zurückgezogen und entgegen der Förderrichtung 28k bewegt. Das Separiermesser 104k separiert die Produktkolonne 100k zwischen zwei Produkten 12k erneut, woraufhin der entgegen der Förderrichtung 28k folgende Halter 26k an die vom Separiermesser 104k separierte Position der Produktkolonne 100k eingeführt wird und ein neuer Produktstapel 14k gebildet wird. Die Produktkolonne 100k kann während der Separiervorgänge in Förderrichtung 28k in Bewegung bleiben, indem das Separiermesser 104k und die Halter 26k sowie Gegenhalter 30k synchron in Förderrichtung 28k mitbewegt werden.

## Patentansprüche

1. Zufuhrvorrichtung zum Zuführen von Produkten (12b) und/oder Produktstapeln (14b) zu einem Verpackungsprozess einer Verpackungsmaschine (16b), insbesondere einer horizontalen Schlauchpackmaschine, mit zumindest einer als geschlossene Schleife ausgebildeten Führungseinheit (20b), auf welcher eine Vielzahl angeordneter Förderelemente (22b) zumindest entlang zumindest eines Arbeitsabschnitts der Führungseinheit (20b) voneinander unabhängig geschwindigkeits- und/oder positionsgeregelt antreibbar angeordnet sind, wobei zumindest ein Förderelement (22b) einen Halter (26b) und zumindest ein in einer Förderrichtung folgendes Förderelement (22b) einen Gegenhalter (30b) aufweist, **gekennzeichnet durch** zumindest ein Stützelement (46b), das auf der Führungseinheit (20b) zwischen zwei Förderelementen (22b) angeordnet ist, wobei das Stützelement (46b) als Sekundärteil (42b) eines Linearmotorsystems (44b) ausgebildet ist und durch eine Steuereinheit (32b) positions- und geschwindigkeitsgeregelt antreibbar ist.

2. Zufuhrvorrichtung zum Zuführen von Produkten (12b) und/oder Produktstapeln (14b) zu einem Verpackungsprozess einer Verpackungsmaschine (16b), insbesondere einer horizontalen Schlauchpackmaschine, mit zumindest einer als geschlossene Schleife ausgebildeten Führungseinheit (20b), auf welcher eine Vielzahl angeordneter Förderelemente (22b) zumindest entlang zumindest eines Arbeitsabschnitts der Führungseinheit (20b) voneinander unabhängig geschwindigkeits- und/oder positionsgeregelt antreibbar angeordnet sind, wobei zumindest ein Förderelement (22b) einen Halter (26b) und zumindest ein in einer Förderrichtung folgendes Förderelement (22b) einen Gegenhalter (30b) aufweist, **gekennzeichnet durch** zumindest ein Stützelement (46b), das auf der Führungseinheit (20b) zwischen zwei Förderelementen (22b) angeordnet ist, wobei das Stützelement (46b) passiv auf der Führungseinheit (20b) angeordnet ist und durch die Förderelemente (22b) ziehbar und/oder stoßbar ist, wobei aufeinander zugewandte Abschlusskanten von Stützflächen (82b) von Halter (26b), Gegenhalter (30b) und Stützelement (46b) als ineinandergreifende Kämme (84b) ausgebildet sind, so dass der Produktstapel (14b) zwischen Halter (26b) und Gegenhalter (30b) durchgehend gestützt wird.

3. Zufuhrvorrichtung nach Anspruch 1 oder 2, **dadurch gekennzeichnet, dass** zumindest ein Förderelement zumindest einen Halter und zumindest einen Gegenhalter aufweist.

4. Zufuhrvorrichtung nach einem der vorhergehenden Ansprüche,
**gekennzeichnet durch** die eine Steuereinheit (32b), die dazu vorgesehen ist, eine Produkt- oder Produktstapellänge und/oder eine Teilung zwischen in Förderrichtung aufeinanderfolgenden Produkten oder Produktstapeln (14b) zu steuern und/oder zu regeln.

5. Zufuhrvorrichtung nach Anspruch 4, **dadurch gekennzeichnet, dass** die Steuereinheit (32b) dazu vorgesehen ist, Produkt- oder Produktstapellängen und/oder die Teilung von in Förderrichtung aufeinander folgenden Produkten oder Produktstapeln (14b) variabel einzustellen.

6. Zufuhrvorrichtung zumindest nach Anspruch 4, **dadurch gekennzeichnet, dass** die Steuereinheit (32b) dazu vorgesehen ist, Produkt- oder Produktstapellängen zu ermitteln.

7. Zufuhrvorrichtung zumindest nach Anspruch 4, **dadurch gekennzeichnet, dass** die Steuereinheit (32b) dazu vorgesehen ist, in zumindest einem Betriebszustand zumindest ein Förderelement (22b) entgegen der Förderrichtung zu bewegen.

8. Zufuhrvorrichtung nach einem der vorhergehenden Ansprüche, **dadurch gekennzeichnet, dass** zumindest ein Abschnitt der Führungseinheit (20b) als Pufferabschnitt ausgebildet ist.

9. Zufuhrvorrichtung nach einem der vorhergehenden Ansprüche, **dadurch gekennzeichnet, dass** die Führungseinheit (20b) zumindest einen Primärteil (40b) und die Förderelemente (22b) jeweils zumindest einen Sekundärteil (42b) eines Linearmotorsystems enthalten.

10. Zufuhrvorrichtung nach einem der vorhergehenden Ansprüche, **dadurch gekennzeichnet, dass** die Halter und/oder Gegenhalter dazu vorgesehen sind, Produkte und/oder Produktstapel aus einer zugeführten Produktkolonne zu separieren.

11. Zufuhrvorrichtung zumindest nach Anspruch 1, **dadurch gekennzeichnet, dass** das Stützelement (46b) und/oder die Förderelemente (22b) Stützflächen mit einer kammartigen Abschlusskante aufweisen.

12. Verpackungsmaschine mit einer Zufuhrvorrichtung (10b) nach einem der vorhergehenden Ansprüche.

13. Verfahren zum Zuführen von Produkten (12b) oder Produktstapeln (14b) zu einer Verpackungsmaschine mit einer Zufuhrvorrichtung (10b) nach einem der Ansprüche 1-11.

## Claims

1. Feeding device for feeding products (12b) and/or product stacks (14b) to a packaging process of a packaging machine (16b), in particular a horizontal tube packaging machine, said feeding device having at least one guide unit (20b) which is realized as a closed loop along which a plurality of arranged conveyor elements (22b) are arranged so as to be drivable in a speed-controlled and/or positionally regulated manner independently of one another at least along at least one operating portion of the guide unit (20b), wherein at least one conveyor element (22b) comprises a holder (26b) and at least one conveyor element (22b) which follows in a conveying direction comprises a counter holder (30b), **characterized by** at least one support element (46b) which is arranged on the guide unit (20b) between two conveyor elements (22b), wherein the support element (46b) is in the form of a secondary part (42b) of a linear motor system (44b) and can be driven in a positionally regulated and speed-controlled manner by means of a control unit (32b).

2. Feeding device for feeding products (12b) and/or product stacks (14b) to a packaging process of a packaging machine (16b), in particular a horizontal tube packaging machine, said feeding device having at least one guide unit (20b) which is realized as a closed loop along which a plurality of arranged conveyor elements (22b) are arranged so as to be drivable in a speed-controlled and/or positionally regulated manner independently of one another at least along at least one operating portion of the guide unit (20b), wherein at least one conveyor element (22b) comprises a holder (26b) and at least one conveyor element (22b) which follows in a conveying direction comprises a counter holder (30b), **characterized by** at least one support element (46b) which is arranged on the guide unit (20b) between two conveyor elements (22b), wherein the support element (46b) is arranged in a passive manner on the guide unit (20b) and can be pulled and/or pushed by the conveyor elements (22b), wherein closing edges, which face toward one another, of support surfaces (82b) of the holder (26b), counter holder (30b) and support element (46b) are in the form of meshing combs (84b), such that the product stack (14b) is supported continuously between the holder (26b) and counter holder (30b).

3. Feeding device according to Claim 1 or 2, **characterized in that** at least one conveyor element comprises at least one holder and at least one counter holder.

4. Feeding device according to one of the preceding claims, **characterized by** the one control unit (32b) which is provided for the purpose of controlling and/or regulating a product length or product stack length and/or a separation between products or product stacks (14b) which follow one after another in the conveying direction.

5. Feeding device according to Claim 4, **characterized in that** the control unit (32b) is provided for the purpose of variably adjusting product lengths or product stack lengths and/or the separation of products or product stacks (14b) which follow one after another in the conveying direction.

6. Feeding device at least according to Claim 4, **characterized in that** the control unit (32b) is provided for the purpose of determining product lengths or product stack lengths.

7. Feeding device at least according to Claim 4, **characterized in that** the control unit (32b) is provided for the purpose of moving at least one conveyor element (22b) in a direction opposite to the conveying direction in at least one operating state.

8. Feeding device according to one of the preceding claims, **characterized in that** at least one portion of the guide unit (20b) is realized as a buffer portion.

9. Feeding device according to one of the preceding claims, **characterized in that** the guide unit (20b) includes at least one primary part (40b) and the conveyor elements (22b) include in each case at least one secondary part (42b) of a linear motor system.

10. Feeding device according to one of the preceding claims, **characterized in that** the holders and/or counter holders are provided for the purpose of separating products and/or product stacks from a supplied product column.

11. Feeding device at least according to Claim 1, **characterized in that** the support element (46b) and/or the conveyor elements (22b) have support surfaces with a comb-like closing edge.

12. Packaging machine having a feeding device (10b) according to one of the preceding claims.

13. Method for feeding products (12b) or product stacks (14b) to a packaging machine having a feeding device (10b) according to one of Claims 1 - 11.

## Revendications

1. Dispositif d'amenée destiné à acheminer des produits (12b) et/ou des empilements de produits (14b) vers un processus d'emballage d'une machine d'emballage (16b), notamment d'une machine d'emballage horizontale à tube, comportant au moins une unité de guidage (20b) réalisée sous la forme d'une boucle fermée, sur laquelle une pluralité d'éléments de convoyage agencés (22b) sont disposés au moins le long d'au moins une section de travail de l'unité de guidage (20b) afin qu'ils puissent être entraînés de manière régulée en vitesse et/ou en position indépendamment les uns des autres, dans lequel au moins un élément de convoyage (22b) comporte un élément de retenue (26b) et au moins un élément de retenue antagoniste (30b) comporte un élément de convoyage suivant (22b) dans une direction de convoyage, **caractérisé par** au moins un élément de support (46b) qui est disposé sur l'unité de guidage (20b) entre deux éléments de convoyage (22b), dans lequel l'élément de support (46b) est réalisé sous la forme d'une pièce secondaire (42b) d'un système de moteur linéaire (44b) et peut être entraîné par une unité de commande (32b) de manière régulée en position et en vitesse.

2. Dispositif d'amenée destiné à acheminer des produits (12b) et/ou des empilements de produits (14b) vers un processus d'emballage d'une machine d'emballage (16b), notamment d'une machine d'emballage horizontale à tube, comportant au moins une unité de guidage (20b) réalisée sous la forme d'une boucle fermée, sur laquelle une pluralité d'éléments de convoyage agencés (22b) sont disposés au moins le long d'au moins une section de travail de l'unité de guidage (20b) de manière à ce qu'ils puissent être entraînés de façon régulée en vitesse et/ou en position indépendamment les uns des autres, dans lequel au moins un élément de convoyage (22b) comporte un élément de retenue (26b) et au moins un élément de retenue antagoniste (30b) comporte un élément de convoyage suivant (22b) dans une direction de convoyage, **caractérisé par** au moins un élément de support (46b) qui est disposé sur l'unité de guidage (20b) entre deux éléments de convoyage (22b), dans lequel l'élément de support (46b) est disposé de manière passive sur l'unité de guidage (20b) et peut être tiré et/ou repoussé par les éléments de convoyage (22b), dans lequel les bords arrières en face les uns des autres de surfaces de support (82b) de l'élément de retenue (26b), de l'élément de retenue antagoniste (30b) et de l'élément de support (46b) sont réalisés sous la forme de peignes imbriqués (84b), de manière à ce que l'empilement de produits (14b) soit supporté de façon continue entre l'élément de retenue (26b) et l'élément de retenue antagoniste (30b).

3. Dispositif d'amenée selon la revendication 1 ou 2, **caractérisé en ce qu'**au moins un élément de convoyage comporte au moins un élément de retenue et au moins un élément de retenue antagoniste.

4. Dispositif d'amenée selon l'une quelconque des revendications précédentes, **caractérisé par** une unité de commande (32b) qui est conçue pour commander et/ou pour réguler un produit ou une longueur, d'empilement de produits et/ou une répartition entre des produits ou des empilements de produits (14b) qui se suivent dans la direction de convoyage.

5. Dispositif d'amenée selon la revendication 4, **caractérisé en ce que** l'unité de commande (32b) est conçue pour régler de manière variable des longueurs de produits ou d'empilements de produits et/ou la répartition de produits ou d'empilements de produits (14b) qui se suivent dans la direction de convoyage.

6. Dispositif d'amenée selon la revendication 4, **caractérisé en ce que** l'unité de commande (32b) est conçue pour déterminer des longueurs de produits ou d'empilements de produits.

7. Dispositif d'amenée selon la revendication 4, **caractérisé en ce que** l'unité de commande (32b) est conçue, dans au moins un état de fonctionnement, pour déplacer au moins un élément de convoyage (22b) dans une direction opposée à la direction de convoyage.

8. Dispositif d'amenée selon l'une quelconque des revendications précédentes, **caractérisé en ce qu'**au moins une section de l'unité de guidage (20b) est réalisée sous la forme d'une section tampon.

9. Dispositif d'amenée selon l'une quelconque des revendications précédentes, **caractérisé en ce que** l'unité de guidage (20b) contient au moins une partie primaire (40b) et **en ce que** les éléments de convoyage (22b) contiennent respectivement au moins une partie secondaire (42b) d'un système de moteur linéaire.

10. Dispositif d'amenée selon l'une quelconque des revendications précédentes, **caractérisé en ce que** l'élément de retenue et/ou l'élément de retenue antagoniste sont conçus pour séparer des produits et/ou des empilements de produits d'une colonne de produits acheminée.

11. Dispositif d'amenée selon la revendication 1, **caractérisé en ce que** l'élément de support (46b) et/ou les éléments de convoyage (22b) comportent des surfaces de support présentant un bord arrière en forme de peigne.

12. Machine d'emballage comportant un dispositif d'amenée (10b) selon l'une quelconque des revendications précédentes.

13. Procédé d'amenée de produits (12b) ou d'empilements de produits (14b) vers une machine d'emballage comportant un dispositif d'amenée (10b) selon l'une quelconque des revendications 1 à 11.
